(19) **Europäisches Patentamt**
**European Patent Office**
**Office européen des brevets**

(11) **EP 4 576 262 A1**

(12) **EUROPEAN PATENT APPLICATION**
published in accordance with Art. 153(4) EPC

(43) Date of publication:
**25.06.2025   Bulletin 2025/26**

(21) Application number: **22956814.2**

(22) Date of filing: **30.08.2022**

(51) International Patent Classification (IPC):
**H01M 4/587** $^{(2010.01)}$   **H01M 10/0525** $^{(2010.01)}$

(52) Cooperative Patent Classification (CPC):
**H01M 4/587; H01M 10/0525;** Y02E 60/10

(86) International application number:
**PCT/CN2022/115926**

(87) International publication number:
**WO 2024/044982 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• **JIN, Wenbo**
  **Ningde, Fujian 352100 (CN)**
• **FENG, Pengyang**
  **Ningde, Fujian 352100 (CN)**

(74) Representative: **Icosa**
**83 avenue Denfert-Rochereau**
**75014 Paris (FR)**

(54) **ELECTROCHEMICAL APPARATUS AND ELECTRONIC DEVICE**

(57)   This application relates to an electrochemical device. The electrochemical device includes a negative electrode. The negative electrode includes a negative current collector and a negative active material layer disposed on the negative current collector. The negative active material layer includes a negative active material. The negative active material includes a carbon-based material, silicon, and sulfur. Based on a total mass of the negative active material layer, a mass percentage of the silicon is a%, and a mass percentage of the sulfur is b%, $0.1 \leq a/b < 1$, and $0.03 \leq b \leq 0.55$.

**Description**

**TECHNICAL FIELD**

This application relates to the field of energy storage, and in particular, to an electrochemical device and an electronic device.

**BACKGROUND**

With the continuous development of electrochemical devices such as lithium-ion batteries, the requirements on the lithium-ion batteries applicable to mobile electronic devices are increasingly higher. Especially, the lithium-ion batteries are expected to exhibit both a high energy density and a high fast-charge capability. Graphite, such as needle-shaped calcined coke, is widely used as a negative active material in the prior art. The needle-shaped calcined coke possesses the advantages such as a low thermal expansion coefficient, a low content of impurities, a high electrical conductivity, a high capacity, and an ease of graphitization. To optimize the performance of the negative active material, the negative active material is usually subjected to processes such as crushing, graphitization, and surface modification. However, the above processes just make a limited contribution to the improvement of kinetics.

Therefore, a modifying negative active material is required in this field to achieve higher kinetic performance and cycle performance.

**SUMMARY**

In view of the disadvantages in the prior art, an objective of this application is to provide an electrochemical device and an electronic device to improve kinetic performance and cycle performance of a battery without reducing the capacity of the battery.

According to a first aspect of this application, an electrochemical device is provided. The electrochemical device includes a negative electrode. The negative electrode includes a negative current collector and a negative active material layer disposed on the negative current collector. The negative active material layer includes a negative active material. The negative active material includes a carbon-based material, silicon, and sulfur. Based on a total mass of the negative active material layer, a mass percentage of the silicon in the negative active material layer is a%, and a mass percentage of the sulfur is b%, satisfying: $0.1 \leq a/b < 1$, and $0.03 \leq b \leq 0.55$.

In a feasible embodiment, a region with an area of 10 mm $\times$ 10 mm is selected on the negative active material layer according to this application. Based on a total mass of the negative active material layer in this region, a mass percentage of silicon in the negative active material layer in the region is a%, and a mass percentage of sulfur is b%, satisfying: $0.1 \leq a/b < 1$, and $0.03 \leq b \leq 0.55$.

The increase in the content of silicon (Si) can effectively increase the gravimetric capacity of the negative active material, and the increase in the content of sulfur (S) exerts a positive effect on the stability of the negative active material. In addition, the element S promotes crystal transformation, and makes the particles of the negative electrode material graphitized more effectively in a heating process of a graphitization process, thereby improving the cycle performance. However, a silicon-containing compound may expand considerably in volume after lithiation. An excessive high content of Si may lead to deterioration of the performance of the negative electrode plate due to cycling expansion. Therefore, an excessive high Si content needs to be avoided.

An excessive high S content may lead to an increase in the reactions between the negative active material and the electrolyte solution, thereby deteriorating the cycle performance and storage performance of the electrochemical device. In addition, an excessive low S content is unable to produce the desired effect. Without being bound by existing theories, the applicant hereof finds that, in a case that the Si content is lower than the S content, for example, in a case that an a/b ratio is less than 1, the element S in the active particles exerts a restraining effect on the expansion of the element Si. When $a/b \geq 1$, the restraining effect of the element S on the expansion of the element Si is reduced greatly. In addition, an excessively low Si content needs to be avoided. When the a/b ratio less than 0.1, the Si content is not enough to increase the gravimetric capacity of the active material, and the element S is relatively surplus. This will lead to an undesired increase in the reactions between the negative active material and the electrolyte solution, thereby deteriorating the cycle performance and storage performance. An advantage of the technical solution of this application is that the a/b ratio is defined to fall within the range of $0.1 < a/b < 1$ in the negative active material layer of the electrochemical device according to this application. Based on the total mass of the negative active material layer, a% denotes the mass percentage of Si, and b% denotes the mass percentage of S.

In a feasible embodiment, based on the total mass of the negative active material layer, the mass percentage of silicon in the negative active material layer falls within a range of 0.01 wt% to 0.055 wt%, and the mass percentage of sulfur falls within a range of 0.03 wt% to 0.55 wt%.

In a feasible embodiment, the negative active material includes a carbon-based material. The carbon-based material includes natural graphite, artificial graphite, or a mixture of thereof.

In a feasible embodiment, the carbon-based material includes natural graphite. As shown in an SEM test, on a cross-section along a normal direction of the current collector, the natural graphite has a pore and/or an interstice, thereby promoting the infiltration effect of the electrolyte solution.

In the context of this application, "pores" and "interstices" may be understood in a known sense in the art. For example, a pore may denote a recess or indent in an approximately circular or rectangular shape on the cross-section, and an interstice may denote a recess or indent in a long narrow shape on the cross-section.

In a feasible embodiment, the carbon-based material includes artificial graphite and natural graphite. A mixing ratio between the artificial graphite and the natural graphite falls within a range of 0: 100% to 30%: 70%. The mixture of artificial graphite and natural graphite exhibits not only the advantages of artificial graphite in terms of the cycle performance, but also the high capacity of natural graphite.

In a feasible embodiment, an $I_D/I_G$ ratio, as an indicator of Raman defects, of the negative active material layer and a BET specific surface area of the negative active material satisfy: $0.1 \leq (I_D/I_G): BET \leq 0.43$, where the $I_D/I_G$ ratio falls within a range of 0.28 to 0.50. An appropriate amount of Raman defects denoted by the $I_D/I_G$ ratio can improve the kinetics of the negative active material. However, an excessively large BET specific surface area may deteriorate the cycle performance and storage performance of the electrochemical device.

In a feasible embodiment, the negative active material layer further includes at least one of phosphorus (P), iron (Fe), or manganese (Mn). Trace elements such as P, Fe, and Mn are helpful for film formation of the negative active material, and therefore, can improve the first-cycle Coulombic efficiency and cycle performance of the electrochemical device. However, when the content of the trace elements is excessively high, side reactions may increase and deteriorate the cycle performance.

In a feasible embodiment, the electrochemical device according to this application satisfies at least one of the following conditions:

(a1) the negative active material layer includes an element P, and, based on the total mass of the negative active material layer, a mass percentage of the element P is $W_P\%$, and $W_P\%$ falls within a range of 0.13% to 0.62%;

(b1) the negative active material layer includes an element Fe, and, based on the total mass of the negative active material layer, a mass percentage of the element Fe is $W_{Fe}\%$, and $W_{Fe}\%$ falls within a range of 0.001% to 0.010%;

(c1) the negative active material layer includes an element Mn, and, based on the total mass of the negative active material layer, a mass percentage of the element Mn is $W_{Mn}\%$, and $W_{Mn}\%$ falls within a range of 0.0001% to 0.0010%; or

(d1) the negative active material layer includes an element P, and, based on the total mass of the negative active material layer, a mass percentage of the element P is $W_P\%$, and $0.049 \leq b/W_P \leq 4.231$.

In a feasible embodiment, the electrochemical device according to this application includes a negative current collector. The negative current collector is optionally a copper (Cu) foil layer.

In a feasible embodiment, an areal density of the copper foil layer falls within a range of 0.0390 mg/mm$^2$ to 0.0920 mg/mm$^2$.

In a feasible embodiment, a coating areal density of the negative active material layer per unit area falls within a range of 0.03 g/mm$^2$ to 0.12 g/mm$^2$.

In a feasible embodiment, the electrochemical device includes an electrolyte solution. The electrolyte solution includes a first additive. The first additive includes at least one of fluoroethylene carbonate or vinylene carbonate.

In a feasible embodiment, the electrochemical device includes an electrolyte solution. The electrolyte solution includes a second additive. The second additive includes at least one of 1,3-propane sultone or ethylene sulfate.

In a feasible embodiment, the electrochemical device according to this application satisfies:

(a2) based on a total mass of the electrolyte solution, a mass percentage of the first additive is $W_1\%$, and $0.1 \leq W_1 \leq 10$;
(b2) based on the total mass of the electrolyte solution, a mass percentage of the second additive is $W_2\%$, and $0.1 \leq W_2 \leq 5$;
(c2) based on the total mass of the electrolyte solution, the mass percentage of the first additive is $W_1\%$, and the mass percentage of the second additive is $W_2\%$, and $0.5 \leq W_1/W_2 \leq 20$; and
(d2) a ratio M of the total mass (in units of g) of the electrolyte solution to a capacity (in units of Ah) of the electrochemical device falls within a range of 0.50 g/Ah to 1.6 g/Ah.

In a feasible embodiment, the electrochemical device of this application further includes a positive electrode. The positive electrode includes a positive current collector and a positive active material layer. The positive active material layer includes a positive active material, a binder, and a conductive agent.

In a feasible embodiment, the electrochemical device of this application further includes a separator. The separator includes a polymer, an inorganic compound or the like formed from a material that is stable to the electrolyte solution of this application.

In the context of this application, the electrochemical device according to this application may be, but is not limited to, a lithium-ion battery or a sodium-ion battery.

According to a second aspect of this application, a method for preparing a negative active material according to this application is provided. The method includes:

(i) pretreating natural graphite A and artificial graphite B separately, and then mixing the pretreated artificial graphite and natural graphite to obtain a mixture D of the artificial graphite and the natural graphite;

(ii) adding a binder to the mixture D obtained in step (i), and mixing well to obtain a mixture E, and then transferring the mixture E into a reactor for granulation to obtain a finished graphitized product; and

(iii) performing a surface treatment on the finished graphitized product obtained in step (ii), so as to obtain a negative active material according to this application.

In a feasible embodiment, the pretreatment in step (i) includes: pre-crushing the natural graphite A and the artificial graphite B, and shaping the natural graphite, where the shaping includes: ball-milling the natural graphite in a ball mill.

During an initial charge of the electrochemical device (such as a lithium-ion battery), a solid electrolyte interphase (SEI) film is formed on a surface of the negative active material. The formation of the SEI film plays an important role in the performance of the lithium-ion battery. On the one hand, the SEI film can exist stably in the electrolyte solution, thereby preventing solvent molecules in the electrolyte solution from entering the negative active material, and in turn, enhancing the cycle performance of the lithium-ion battery. On the other hand, the formation of the SEI film consumes lithium ions, and increases the irreversible capacity during the first charge-discharge cycle, thereby decreasing the first-cycle Coulombic efficiency of the lithium-ion battery. In addition, the formation of the SEI film is correlated with a surface defect density (also referred to as disorder) of the negative active material. A relatively high surface defect density of the negative active material promotes the formation of the SEI film and consumes more lithium ions.

This application controls the formation of the SEI film by adjusting the surface treatment manner of the negative active material, thereby implementing a balance between the cycle capacity retention rate and the kinetic performance of the lithium-ion battery. In a feasible embodiment, the surface treatment manner is, for example, to mix a finished graphitized product with a coating agent, and perform surface treatment in a reactor, so as to obtain the negative active material according to this application.

According to a third aspect of this application, an electronic device is provided. The electronic device includes the electrochemical device according to the first aspect of this application. In some embodiments, the electronic devices of this application include, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

In contrast to the prior art, the electrochemical device according to this application achieves improved kinetic performance and cycle performance without reducing the capacity of the battery. Other features and advantages of this application will be partly described in detail in the subsequent specific embodiments.

## DETAILED DESCRIPTION

The following describes this application in more detail with reference to specific embodiments. Understandably, the specific embodiments are merely intended to illustrate this application but not intended to limit the scope of this application.

Unless otherwise expressly specified, the following terms used herein have the meanings defined below.

In the embodiments and claims, a list of items recited by using the terms such as "at least one of", "at least one thereof", "at least one type of" or other similar terms may mean any combination of the recited items. For example, if items A and B are recited, the phrases "at least one of A and B" and "at least one of A or B" mean: A alone; B alone; or both A and B. In another example, if items A, B, and C are recited, the phrase "at least one of A, B, or C" means: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

In the description of this application, unless otherwise expressly specified and defined, the terms such as "first", "second", and "third" are merely used for ease of description, but are not meant to indicate or imply relative importance or mutual relationships.

In addition, a quantity, a ratio, or another numerical value herein is sometimes expressed in the format of a range.

Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified. In this application, the peak intensity at 1350 cm$^{-1}$, denoted as $I_{D1}$, and the peak intensity at 1580 cm$^{-1}$, denoted as $I_{G1}$, may vary to some extent on different instruments, and therefore, may be understood as a peak intensity at a wavenumber of 1350 cm$^{-1}$ $\pm$50 cm$^{-1}$ and a peak intensity at a wavenumber of 1580 cm$^{-1}$ $\pm$50 cm$^{-1}$, respectively.

This application is further described below with reference to some embodiments. Understandably, such embodiments are merely intended to illustrate this application but not to limit the scope of this application.

**Positive electrode plate**

The electrochemical device of this application further includes a positive electrode. The positive electrode includes a positive current collector and a positive active material layer. The positive active material layer includes a positive active material, a binder, and a conductive agent.

According to some embodiments of this application, the positive current collector may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

According to some embodiments of this application, the positive active material includes at least one of lithium cobalt oxide, lithium nickel cobalt manganese oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanium oxide. In some embodiments, the binder includes a binder polymer, such as at least one of polyvinylidene fluoride, polytetrafluoroethylene, polyolefins, sodium carboxymethylcellulose, lithium carboxymethylcellulose, modified polyvinylidene fluoride, modified SBR rubber, or polyurethane. In some embodiments, the polyolefin binders include at least one of polyethylene, polypropylene, polyvinyl ester, polyvinyl alcohol, or polyacrylic acid. In some embodiments, the conductive agent includes a carbon-based material such as natural graphite, artificial graphite, carbon black, acetylene black, Ketjen black, or carbon fiber; a metal-based material such as metal powder or metal fiber containing copper, nickel, aluminum, silver, or the like; a conductive polymer such as a polyphenylene derivative; or any mixture thereof.

**Negative active material**

According to some embodiments of this application, the negative active material is prepared by the following steps:

(i) Providing natural graphite A and artificial graphite B, where the mass ratio between A and B, denoted as $m_A/m_B$, satisfies $0 \le m_A/m_B \le 1.5$; and Pulverizing the feedstocks of natural graphite A and artificial graphite B into particles with an average particle diameter ranging from 5 $\mu$m to 10 $\mu$m, and then shaping the pulverized natural graphite A, and specifically, ball-milling the natural graphite in a ball mill and remove fine powder; preheating the pulverized artificial graphite B until 300 °C to 1200 °C to obtain a precursor C; mixing the shaped natural graphite A with the precursor C, and stirring well to form a homogeneous mixture D; and then adding a composite binder into the mixture D, where the mass percentage of the binder is 5 wt% to 20 wt% based on the total mass of A and C, so as to form a mixture E. The composite binder is a composite of a high-sulfur pitch and SiO. The softening point of the high-sulfur pitch is approximately 150 °C, approximately 200 °C, or approximately 300 °C, for example. In the high-sulfur pitch, the mass percentage of the element S is greater than or equal to 4 wt%, and, based on the total mass of the composite binder, the mass percentage of SiO is less than or equal to 5 wt%. In addition, trace elements such as P, Fe, and Mn may exist in the high-sulfur pitch. Therefore, the content of trace elements such as P, Fe, and Mn in the negative active material can be controlled by selecting the pitch; and

(ii) Transferring the well mixed mixture E into a reactor, heating and stirring the mixture at a temperature of 300 °C to 700 °C for 2 h to 4 h, and then taking out the heated mixture E, and carbonizing the mixture E at a high temperature in a carbonization furnace, where the temperature in the furnace is set to be in a range of 900 °C to 1200 °C, and the duration of the high-temperature carbonization may be in a range of 15 h to 25 h; and then taking out the mixture E subjected to the high-temperature carbonization, and cooling the mixture E down to a room temperature to obtain a finished product of negative active material.

**Negative electrode plate**

The negative electrode plate may be prepared by the following method: Dispersing the above-prepared negative active material and a binder into a deionized water solvent, mixing well to obtain a negative electrode slurry, and then applying the negative electrode slurry onto a negative current collector, and drying and cold-pressing the current collector to obtain the negative electrode plate according to this application.

According to some embodiments of this application, the negative current collector is a copper foil.

According to some embodiments of this application, a conductive layer is applied onto the negative current collector before the negative electrode slurry is applied, and then the negative electrode slurry is applied onto the surface, coated with the conductive layer, of the negative current collector.

**Separator**

The material and the shape of the separator used in the electrochemical apparatus according to this application are not particularly limited, and may be based on any technology disclosed in the prior art. In some embodiments, the separator includes a polymer or an inorganic substance or the like formed of a material that is stable to the electrolyte according to this application.

For example, the separator may include a substrate layer and optionally a surface treatment layer. The substrate layer is a non-woven fabric, film or composite film, which, in each case, is of a porous structure. The material of the substrate layer is at least one of polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

**Electrolyte solution**

The electrochemical device of this application further includes an electrolyte solution.

According to some embodiments of this application, the electrolyte solution may include an organic solvent, a lithium salt, and optionally an additive. The organic solvent in the electrolyte solution of this application may be any organic solvent known in the prior art suitable for use as a solvent of the electrolyte solution. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, such as at least one of 1,3-dioxane (DOL) or ethylene glycol dimethyl ether (DME). In some embodiments, the lithium salt includes at least one of an organic lithium salt or an inorganic lithium salt. In some embodiments, the lithium salt includes, but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate) borate $LiB(C_2O_4)_2$ (LiBOB), or lithium difluoro(oxalate)borate $LiBF_2(C_2O_4)$ (LiDFOB).

According to some embodiments of this application, the additive in the electrolyte solution includes at least one of fluoroethylene carbonate or vinylene carbonate.

According to some embodiments of this application, the additive in the electrolyte solution includes at least one of 1,3-propane sultone or ethylene sulfate.

**Lithium-ion battery**

According to some embodiments of this application, a lithium-ion battery may be prepared by the following method: Stacking the positive electrode plate, the separator, and the negative electrode plate sequentially, placing the separator between the positive electrode and the negative electrode to serve a separation function, and then winding the stacked structure to obtain an electrode assembly; welding tabs onto the electrode assembly, and then putting the electrode assembly into an outer package made of an aluminum laminated film; drying the electrode assembly in the package, and then injecting the electrolyte solution into the dried electrode assembly; putting the wound electrode assembly into the outer package, injecting the electrolyte solution, and sealing the package; and performing steps such as chemical formation, degassing, and edge trimming to obtain a lithium-ion battery.

**Test methods**

1. Testing the direct current resistance (DCR)

Charging, at 25 °C, a lithium-ion battery at a constant current of 1.5 C rate until the voltage reaches 4.48 V, and then charging the battery at a constant voltage of 4.48 V until the current drops to 0.05 C, and then leaving the battery to stand for 30 minutes. Discharging the battery at a current of 0.1 C for 10 s (sampling the voltage value at intervals of 0.1 s, and recording the voltage values, averaged out as $U_1$), and then discharging the battery at a current of 1 C for 360 s (sampling the voltage value at intervals of 0.1 s, and recording the voltage values, averaged out as $U_2$). Repeating the charge-discharge steps for 5 cycles. "1 C" is a rate of current at which the lithium-ion battery can be fully discharged within 1 hour.

Calculating the direct current resistance DCR of the lithium-ion battery cycled at 25 °C according to the following formula:

$$R = (U_2 - U_1)/(1\ C - 0.1\ C).$$

Unless otherwise expressly specified, DCR referred to herein is a direct current resistance of the battery in a 50% state of charge (SOC).

2. Testing the cycle capacity retention rate of the battery cycled at 45 °C

Leaving a specimen of the lithium-ion battery to stand for 5 minutes at a temperature of 45 °C, charging the battery at a constant current of 1.5 C until the voltage reaches 4.48 V, charging the battery at a constant voltage of 4.48 V until the current drops to 0.05 C, leaving the battery to stand for 5 minutes, and then discharging the battery at a constant current of 1.0 C until a voltage of 3.0 V, and then leaving the battery to stand for 5 minutes. Recording the capacity at this time as $D_0$. Repeating the above charge-discharge steps for 500 cycles, and recording the discharge capacity of the last cycle as $D_1$. Calculating the capacity retention rate of the lithium-ion battery cycled at 45 °C for 500 cycles as $D_1/D_0 \times 100\%$.

3. Volumetric energy density (VED)

Charging a lithium-ion battery as a specimen at a constant current of 1.5 C at a temperature of 25 °C until the voltage reaches 4.48 V, and then charging the battery at a constant voltage of 4.48 V until the current drops to 0.05 C, leaving the battery to stand for 5 minutes, and then discharging the battery at a constant current of 0.025 C until a voltage of 3.0 V, leaving the battery to stand for 5 minutes, and recording the capacity at this time as D in units of mAh. Subsequently, charging the lithium-ion battery at a constant current of 1.0 C until the voltage reaches 4.0 V, measuring the length, width, and thickness of the lithium-ion battery at this time, and calculating the volume V of the lithium-ion battery in units of mm$^3$.

Calculating the volumetric energy density of the lithium-ion battery according to the following formula:

$$VED = (D \times 3.89 \times 1000)/V,$$

in units of Wh/L.

4. Specific surface area (BET)

Measuring the BET specific surface area of the active material by referring to the standard GB/T 19587-2017. Taking a specified amount of negative active material layer as a specimen, and dissolving the specimen in an organic solvent to remove the binder and thickener; drying the specimen to obtain negative active material powder. A specific test process is: Weighing out 1 to 8 grams of the negative active material powder as a specimen and putting the specimen into a 1/2-inch long tube with a bulb (the volume of the specimen weighed out exceeds at least 1/3 of the volume of the bulb) (the caliber of the spherical bulb part is 12 mm); pre-treating the specimen at 200 °C for 2 hours, and then putting the specimen into a TriStar3030 (Micromeritics, USA) analyzer for testing; measuring the specific surface area at a liquid nitrogen temperature of 77 degrees Kelvin by using $N_2$ (purity: 99.999%) as an adsorption gas, and calculating the specific surface area by a Brunauer-Emmett-Teller (BET) method.

5. Raman test for the negative active material layer

Discharging the lithium-ion secondary battery until the voltage drops to 3.0 V, and then disassembling the battery and taking out the negative electrode plate. Selecting a 100 μm × 100 μm area on the negative electrode plate, scanning this area of the negative active material layer by using a laser microscope confocal Raman spectrometer (Raman, HR Evolution, HORIBA Scientific Instrument Division), obtaining the $D_1$ peak, the $D_2$ peak, and the G peak of all negative active particles in this area, processing the data by using LabSpec software to obtain the intensities of the $D_1$ peak, $D_2$ peak, and G peak of each particle, denoted as $I_{d1}$, $I_{d2}$, and $I_g$, respectively. Statistically analyzing the $I_{d1}/I_g$ ratios at steps of 0.02 to obtain a normal distribution graph. Determining $(I_{d1}/I_g)$max and $(I_{d1}/I_g)$min of the particles, and calculating the mean values of $I_{d1}/I_g$ ratios and $I_{d2}/I_g$ ratios, and a variance of the $I_{d1}/I_g$ ratio. The laser wavelength of the Raman spectrometer may be in the range of 532 nm to 785 nm.

$D_1$ peak: typically located near 1350 cm$^{-1}$, caused by a radial breathing mode of symmetric stretching vibration of sp$^2$ carbon atoms in an aromatic ring (reflecting structural defects).

$D_2$ peak: typically located near 1620 cm$^{-1}$, occurring along with the $D_1$ peak, related to the vibration of E2g optical phonons in the superficial layer of the graphite, and characterizing the regularity of the arrangement of microcrystal structure of the graphite.

G peak: typically located near 1580 cm$^{-1}$, caused by the stretching vibration between sp$^2$ carbon atoms, and corresponding to the vibration of E2g optical phonons at the center of the Brillouin zone (in-plane vibration of carbon atoms).

6. Testing the content of element

Discharging the lithium-ion secondary battery until the voltage drops to 3.0 V, and then disassembling the battery and taking out the negative electrode plate. Weighing out 1 to 3 grams of the negative active material layer as a specimen. Taking 1 gram of the specimen, and digesting the specimen at 130 °C to 150°C for 1 to 3 hours by using a digestion solution that is formed by mixing 10 mL of aqua regia with 10 mL of hydrofluoric acid. Analyzing the elements in the digested solution by using an OES-PE-AVIO200 inductively coupled plasma-optical emission spectrometer. Determining the mass percentage of each element through spectral analysis, so as to obtain the content of the element in the negative active material layer.

**Embodiments and Comparative Embodiments**

**Embodiment 1**

Preparing a positive electrode plate: Dissolving lithium cobalt oxide ($LiCoO_2$) as a positive active material, acetylene black as a conductive agent, and polyvinylidene difluoride (PVDF for short) as a binder at a mass ratio of approximately 97.6: 1.2: 1.2 in an N-methylpyrrolidone (NMP for short) solvent, and stirring well to obtain a positive electrode slurry. Subsequently, coating a positive current collector aluminum foil with the resulting positive electrode slurry for a thickness of 150 to 260 μm. Oven-drying, cold-pressing, cutting, slitting, and drying the coated aluminum foil to obtain a positive electrode plate.

Preparing a negative active material: (i) Pulverizing 100 kg of natural graphite A into particles of approximately 8 μm in diameter, pulverizing 200 kg of artificial graphite B into particles of approximately 10 μm in diameter, and then ball-milling the particles of the natural graphite A in a ball mill for 30 min. Removing 15 kg of fine powder, heating the particles of the artificial graphite B up to 800 °C, and pretreating the particles to obtain a precursor C. Mixing well the ball-milled natural graphite A with the precursor C to obtain a mixture D that weighs 285 kg. Stirring the mixture well, and then adding 25 kg of composite binder into the mixture, and mixing well to obtain a mixture E. The composite binder is a composite of a high-sulfur pitch that weighs 21 kg and SiO that weighs 4 kg. The softening point of the composite binder is approximately 200 °C. In the high-sulfur pitch, the mass percentage of the element S is 4.5 wt%; and

(ii) Transferring the well mixed mixture E into a reactor, heating and stirring the mixture at a temperature of 500 °C for 2 h, and then taking out the heated mixture E, and carbonizing the mixture E at a high temperature in a carbonization furnace, where the temperature in the furnace is set to 1100 °C, and the duration of the high-temperature carbonization is 20 h; and then taking out the mixture E subjected to the high-temperature carbonization, and cooling the mixture E down to a room temperature to obtain a finished product of negative active material.

Preparing a negative electrode plate: Dispersing the above-prepared negative active material, styrene-butadiene rubber (SBR) as a binder, and sodium carboxymethyl cellulose (CMC) as a thickener at a mass ratio of 97.7: 1.2: 1.1 in a deionized water solvent, stirring well to obtain a homogenous negative electrode slurry. Applying the negative electrode slurry onto a negative current collector copper foil already coated with a conductive layer. Oven-drying and cold-pressing the copper foil to obtain a negative electrode plate.

Preparing a separator: Using a polyethylene (PE) porous polymer film of approximately 7 μm in thickness as a separator.

Preparing an electrolyte solution: Mixing ethylene carbonate (EC), propylene carbonate (PC), and diethyl carbonate (DEC) at a mass ratio of 1: 1: 1 in an argon atmosphere glovebox in which the water content is less than 10 ppm. Adding $LiPF_6$ as a lithium salt, stirring well, and then adding fluoroethylene carbonate (FEC) and stirring well to obtain a homogeneous electrolyte solution. Based on the total mass of the electrolyte solution, the mass percentage of the $LiPF_6$ is 12.5 wt%, and the mass percentage of the FEC is 5 wt%.

Preparing a lithium-ion battery: Stacking the positive electrode plate, the separator, and the negative electrode plate sequentially, placing the separator between the positive electrode and the negative electrode to serve a separation function, and then winding the stacked structure to obtain an electrode assembly; welding tabs onto the electrode assembly, and then putting the electrode assembly into an outer package made of an aluminum laminated film foil; drying the electrode assembly in the package, and then injecting the electrolyte solution into the dried electrode assembly; putting the wound electrode assembly into the outer package, injecting the electrolyte solution, and sealing the package; and performing steps such as chemical formation, degassing, and edge trimming to obtain a lithium-ion battery.

**Embodiments 2 to 14 and Comparative Embodiment 1**

In Embodiments 2 to 14 and Comparative Embodiment 1, the corresponding lithium-ion battery is obtained by the same method as in Embodiment 1, and the Si content a (%), the S content b (%), the a/b ratio, and the content (%) of other elements in the negative active material layer are shown in Table 1. Table 1 also shows the capacity retention rate and the DC resistance (DCR) of the lithium-ion battery charged and discharged for 500 cycles.

**Table 1**

| Serial number | a/b | a (%) | b (%) | $W_P$ (%) | $W_{Fe}$ (%) | $W_{Mn}$ (%) | $b/W_P$ | Pores/interstices existent? | Capacity retention rate (%) (after 500 cycles) | DCR (mΩ) |
|---|---|---|---|---|---|---|---|---|---|---|
| Embodiment 1 | 0.1 | 0.055 | 0.55 | 0.13 | 0.001 | 0.0001 | 4.231 | Yes | 80.8 | 128 |
| Embodiment 2 | 0.2 | 0.052 | 0.26 | 0.18 | 0.002 | 0.0002 | 1.444 | Yes | 81.0 | 125 |
| Embodiment 3 | 0.3 | 0.049 | 0.163 | 0.25 | 0.003 | 0.0003 | 0.653 | Yes | 81.2 | 120 |
| Embodiment 4 | 0.4 | 0.044 | 0.11 | 0.29 | 0.004 | 0.0004 | 0.379 | Yes | 81.7 | 118 |
| Embodiment 5 | 0.5 | 0.04 | 0.08 | 0.33 | 0.005 | 0.0005 | 0.242 | Yes | 82.6 | 112 |
| Embodiment 6 | 0.6 | 0.038 | 0.063 | 0.39 | 0.006 | 0.0006 | 0.162 | Yes | 82.5 | 111 |
| Embodiment 7 | 0.7 | 0.036 | 0.051 | 0.41 | 0.007 | 0.0007 | 0.125 | Yes | 82.4 | 110 |
| Embodiment 8 | 0.8 | 0.034 | 0.043 | 0.5 | 0.008 | 0.0008 | 0.085 | Yes | 82.0 | 118 |
| Embodiment 9 | 0.9 | 0.032 | 0.036 | 0.55 | 0.009 | 0.0009 | 0.065 | Yes | 81.3 | 126 |
| Embodiment 10 | 0.99 | 0.03 | 0.03 | 0.62 | 0.01 | 0.001 | 0.049 | Yes | 81.0 | 131 |
| Embodiment 11 | 0.5 | 0.04 | 0.08 | 0 | 0.005 | 0.0005 | / | Yes | 82.5 | 135 |
| Embodiment 12 | 0.6 | 0.038 | 0.063 | 0.39 | 0 | 0 | 0.162 | Yes | 82.3 | 132 |
| Embodiment 13 | 0.7 | 0.036 | 0.051 | 0 | 0 | 0 | / | Yes | 82.0 | 133 |
| Embodiment 14 | 0.7 | 0.036 | 0.051 | 0 | 0.005 | 0 | / | Yes | 82.1 | 131 |

(continued)

| Serial number | a/b | a (%) | b (%) | $W_P$ (%) | $W_{Fe}$ (%) | $W_{Mn}$ (%) | $b/W_P$ | Pores/interstices existent? | Capacity retention rate (%) (after 500 cycles) | DCR (mΩ) |
|---|---|---|---|---|---|---|---|---|---|---|
| Comparative Embodiment 1 | 1.5 | 0.102 | 0.067 | 0 | 0 | 0 | / | No | 70.2 | 145 |

In Table 1, as can be seen from comparison of the test results between Embodiments 1 to 14 and Comparative Embodiment 1, when the negative active material layer satisfies the condition 0.1 < a/b < 1, the battery achieves significantly higher cycle performance and storage performance, that is, a higher capacity retention rate and a lower direct current resistance.

The increase in the Si content is beneficial to the storage of active lithium to some extent, and can improve the gravimetric capacity of the active material. The element S is a main element involved in film formation, and promotes the cycle capacity retention. Trace elements such as P, Fe, and Mn are helpful for film formation of the negative active material, and improve the stability of the SEI film, thereby improving the cycle performance and reducing the direct current resistance of the lithium-ion battery.

Further, Embodiments 15 to 31 are implemented according to the preparation method described above, and Table 2 shows the $I_D/I_G$ ratio as an indicator of the Raman defect density of the negative active material layer, and the ratio of the Raman defect indicator ID/IG to the BET specific surface area of the negative active material layer, and shows how the coating areal density CW of the negative active layer and the areal density of the copper foil affect the volumetric energy density (VED), the cycle capacity retention rate, and the direct current resistance (DCR) of the lithium-ion battery.

**Table 2**

| | $I_D/I_G$ | $(I_D/I_G)$: BET | CW | Areal density of copper foil | VED (Wh/L) | Capacity retention rate (%) (after 500 cycles) | DCR (mΩ) |
|---|---|---|---|---|---|---|---|
| Embodiment 6 | 0.55 | 0.50 | 0.300 | 0.082 | 750 | 82.5 | 111 |
| Embodiment 15 | 0.28 | 0.10 | 0.120 | 0.039 | 780 | 84.0 | 88 |
| Embodiment 16 | 0.35 | 0.10 | 0.113 | 0.043 | 778 | 83.8 | 87 |
| Embodiment 17 | 0.43 | 0.10 | 0.102 | 0.051 | 776 | 83.5 | 86 |
| Embodiment 18 | 0.50 | 0.10 | 0.095 | 0.057 | 775 | 83.3 | 85 |
| Embodiment 19 | 0.28 | 0.30 | 0.089 | 0.062 | 773 | 84.9 | 95 |
| Embodiment 20 | 0.35 | 0.30 | 0.082 | 0.067 | 772 | 84.9 | 91 |
| Embodiment 21 | 0.43 | 0.30 | 0.078 | 0.071 | 769 | 84.3 | 90 |
| Embodiment 22 | 0.50 | 0.30 | 0.062 | 0.076 | 766 | 84.1 | 89 |
| Embodiment 23 | 0.28 | 0.43 | 0.059 | 0.080 | 763 | 85.8 | 102 |
| Embodiment 24 | 0.35 | 0.43 | 0.041 | 0.085 | 762 | 85.6 | 101 |
| Embodiment 25 | 0.43 | 0.43 | 0.038 | 0.089 | 760 | 85.5 | 100 |
| Embodiment 26 | 0.50 | 0.43 | 0.030 | 0.092 | 758 | 85.3 | 98 |
| Embodiment 27 | 0.35 | 0.43 | 0.030 | 0.060 | 762 | 86.0 | 85 |
| Embodiment 28 | 0.35 | 0.43 | 0.070 | 0.060 | 769 | 85.2 | 90 |
| Embodiment 29 | 0.35 | 0.43 | 0.100 | 0.060 | 776 | 84.3 | 98 |
| Embodiment 30 | 0.35 | 0.43 | 0.120 | 0.060 | 779 | 83.5 | 105 |
| Embodiment 31 | 0.20 | 0.03 | 0.130 | 0.100 | 739 | 80.0 | 120 |

As can be seen from Table 2, on the basis of Embodiment 6 in Table 1, a further investigation is performed on the Raman defect density of the negative active material layer, the ratio of the Raman defect indicator ID/IG to the BET specific surface area of the negative active material layer, and how the coating areal density CW and the areal density of the copper foil affect the volumetric energy density (VED), the cycle capacity retention rate, and the direct current resistance (DCR) of the lithium-ion battery.

As can be seen from comparison of the test results between Embodiments 15 to 18, Embodiments 19 to 22, and Embodiments 23 to 26, when the ratio of $I_D/I_G$ to BET remains constant, with the increase of $I_D/I_G$, the cycle capacity retention rate declines gradually and the DCR decreases. This is attributed to an increase in the lithiation channels on the surface of the negative active material. The increase in the lithiation channels promotes fast intercalation and deintercalation of lithium ions, thereby improving the kinetic performance. In addition, by making the CW fall within the range of 0.03 to 0.12 g/mm$^2$, the infiltration effect of the electrolyte solution is improved, and in turn, the cycle performance of the lithium-ion battery is improved.

Further, Embodiments 32 to 48 are implemented according to the preparation method described above, in which the impact of the type and mass percentage of graphite as well as the type and content of additives in the electrolyte solution on the cycle capacity retention rate and the DCR of the lithium-ion battery is shown in Table 3.

**Table 3**

| Embodiment | Mixing ratio between artificial graphite and natural graphite | First additive | Second additive | $W_1$ | $W_2$ | M | Cycle capacity retention rate (500 cycles) | DCR (mΩ) |
|---|---|---|---|---|---|---|---|---|
| Embodiment 16 | 0 | Fluoroethylene carbonate | 1,3-propane sultone | 11 | 6 | 1.7 | 84.9 | 91 |
| Embodiment 32 | 0 | Fluoroethylene carbonate | / | 11 | 0 | 1.7 | 84.6 | 93 |
| Embodiment 33 | 0 | Vinylene carbonate | / | 11 | 0 | 1.7 | 84.5 | 93 |
| Embodiment 34 | 0 | / | 1,3-propane sultone | 0 | 6 | 1.7 | 84.5 | 92 |
| Embodiment 35 | 0 | / | Ethylene sulfate | 0 | 6 | 1.7 | 84.3 | 93 |
| Embodiment 36 | 1:9 | Fluoroethylene carbonate | 1,3-propane sultone | 0.1 | 0.1 | 0.5 | 87.7 | 90 |
| Embodiment 37 | 1:9 | Fluoroethylene carbonate | 1,3-propane sultone | 3 | 2 | 1.0 | 87.9 | 92 |
| Embodiment 38 | 1:9 | Vinylene carbonate | Ethylene sulfate | 6 | 3 | 1.3 | 88.0 | 93 |
| Embodiment 39 | 1:9 | Vinylene carbonate | Ethylene sulfate | 10 | 5 | 1.6 | 88.2 | 95 |
| Embodiment 40 | 2:8 | Fluoroethylene carbonate | 1,3-propane sultone | 0.1 | 0.1 | 0.5 | 87.0 | 88 |
| Embodiment 41 | 2:8 | Fluoroethylene carbonate | 1,3-propane sultone | 3 | 2 | 1.0 | 87.2 | 87 |
| Embodiment 42 | 2:8 | Vinylene carbonate | Ethylene sulfate | 6 | 3 | 1.3 | 87.3 | 85 |

(continued)

| Embodiment | Mixing ratio between artificial graphite and natural graphite | First additive | Second additive | $W_1$ | $W_2$ | M | Cycle capacity retention rate (500 cycles) | DCR (m$\Omega$) |
|---|---|---|---|---|---|---|---|---|
| Embodiment 43 | 2:8 | Vinylene carbonate | Ethylene sulfate | 10 | 5 | 1.6 | 87.5 | 83 |
| Embodiment 44 | 3:7 | Fluoroethylene carbonate | 1,3-propane sultone | 0.1 | 0.1 | 0.5 | 86.2 | 82 |
| Embodiment 45 | 3:7 | Fluoroethylene carbonate | 1,3-propane sultone | 3 | 2 | 1.0 | 86.3 | 81 |
| Embodiment 46 | 3:7 | Vinylene carbonate | Ethylene sulfate | 6 | 3 | 1.3 | 86.5 | 80 |
| Embodiment 47 | 3:7 | Vinylene carbonate | Ethylene sulfate | 10 | 5 | 1.6 | 86.6 | 79 |
| Embodiment 48 | 1 | Vinylene carbonate | 1,5-propane sultone | 0.05 | 0.05 | 0.4 | 80.0 | 100 |

As shown in Table 3, on the basis of Embodiment 16 in Table 2, a further investigation is performed on the impact of the type and mass percentage of graphite as well as the type and content of additives in the electrolyte solution on the cycle capacity retention rate and the DCR of the lithium-ion battery.

100 wt% natural graphite is selected as a subject of study according to Embodiments 16 and 32 to 35. As can be seen, the added additives improve the effect of forming the SEI film of the negative electrode, thereby improving the cycle performance and the kinetic performance of the lithium-ion battery.

A mixture of 10 wt% artificial graphite and 90 wt% natural graphite is selected as a subject of study according to Embodiments 36 to 39. By selecting different additives, the effect of forming the SEI film is improved, thereby improving the kinetic performance of the lithium-ion battery, for example, increasing the cycle capacity retention rate and reducing the DCR of the lithium-ion battery.

With the increase in the content of artificial graphite, due to high isotropy of the artificial graphite, the lithium-ion transport path in the lithium-ion battery is shortened, thereby improving the kinetic performance of the lithium-ion battery, for example, increasing the cycle capacity retention rate and reducing the DCR of the lithium-ion battery.

Although illustrative embodiments have been demonstrated and described herein, a person skilled in the art understands that the foregoing embodiments are never to be construed as a limitation on this application, and any changes, replacements, and modifications may be made to the embodiments without departing from the spirit, principles, and scope of this application. Such changes, replacements, and modifications still fall within the protection scope of this application.

**Claims**

1. An electrochemical device, comprising a negative electrode; the negative electrode comprising a negative current collector and a negative active material layer disposed on the negative current collector; the negative active material layer comprising a negative active material; wherein the negative active material comprises a carbon-based material, silicon, and sulfur; and, based on a total mass of the negative active material layer, a mass percentage of the silicon is a%, and a mass percentage of the sulfur is b%, wherein, $0.1 \leq a/b < 1$, and $0.03 \leq b \leq 0.55$.

2. The electrochemical device according to claim 1, wherein $0.01 \leq a \leq 0.055$.

3. The electrochemical device according to claim 1, wherein the negative active material layer further comprises at least one of an element P, an element Fe, or an element Mn.

4.   The electrochemical device according to claim 1, wherein, satisfying at least one of the following conditions:

   (a1) the negative active material layer comprises an element P; and, based on the total mass of the negative active material layer, a mass percentage of the element P is $W_P$%, and $0.13 \leq W_P \leq 0.62$;
   (b1) the negative active material layer comprises an element Fe; and, based on the total mass of the negative active material layer, a mass percentage of the element Fe is $W_{Fe}$%, and $0.001 \leq W_{Fe} \leq 0.010$;
   (c1) the negative active material layer comprises an element Mn; and, based on the total mass of the negative active material layer, a mass percentage of the element Mn is $W_{Mn}$%, and $0.0001 \leq W_{Mn} \leq 0.0010$; or
   (d1) the negative active material layer comprises an element P; and, based on the total mass of the negative active material layer, a mass percentage of the element P is $W_P$%, and $0.049 \leq b/W_P \leq 4.231$.

5.   The electrochemical device according to claim 1, wherein the carbon-based material comprises natural graphite, and in a cross-section along a normal direction of the current collector, the natural graphite has a pore and/or an interstice.

6.   The electrochemical device according to claim 1, wherein an $I_D/I_G$ ratio, as an indicator of Raman defects, of the negative active material layer and a BET specific surface area of the negative active material satisfy: $0.1 \leq (I_D/I_G)$: BET $\leq 0.43$, wherein the $I_D/I_G$ ratio falls within a range of 0.28 to 0.50.

7.   The electrochemical device according to claim 5, wherein the carbon-based material further comprises artificial graphite.

8.   The electrochemical device according to claim 7, wherein a mass ratio between the artificial graphite and the natural graphite falls within a range of 0: 100% to 30%: 70%.

9.   The electrochemical device according to claim 1, wherein the negative current collector is a copper foil layer, and an areal density of the copper foil layer is 0.0390 mg/mm$^2$ to 0.0920 mg/mm$^2$.

10.   The electrochemical device according to claim 1, wherein a coating areal density of the negative active material layer per unit area falls within a range of 0.03 g/mm$^2$ to 0.12 g/mm$^2$.

11.   The electrochemical device according to claim 1, wherein the electrochemical device comprises an electrolyte solution, the electrolyte solution comprises a first additive, and the first additive comprises at least one of fluoroethylene carbonate or vinylene carbonate.

12.   The electrochemical device according to claim 1, wherein the electrochemical device comprises an electrolyte solution, the electrolyte solution comprises a second additive, and the second additive comprises at least one of 1,3-propane sultone or ethylene sulfate.

13.   The electrochemical device according to claim 11 or 12, wherein, satisfying:

   (a2) based on a total mass of the electrolyte solution, a mass percentage of the first additive is $W_1$%, and $0.1 \leq W_1 \leq 10$;
   (b2) based on the total mass of the electrolyte solution, a mass percentage of the second additive is $W_2$%, and $0.1 \leq W_2 \leq 5$;
   (c2) based on the total mass of the electrolyte solution, the mass percentage of the first additive is $W_1$%, and the mass percentage of the second additive is $W_2$%, and $0.5 \leq W_1/W_2 \leq 20$; and
   (d2) a ratio M of the total mass of the electrolyte solution to a capacity of the electrochemical device falls within a range of 0.50 g/Ah to 1.6 g/Ah.

## INTERNATIONAL SEARCH REPORT

| International application No. |
| --- |
| **PCT/CN2022/115926** |

### A. CLASSIFICATION OF SUBJECT MATTER

H01M4/587(2010.01)i;H01M10/0525(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 负极, 阳极, 碳, 石墨, 硅, 硫, 含量, 质量, negative electrode, anode, carbon, graphite, silicon, Si, sulfur, S, content, mass

### C. DOCUMENTS CONSIDERED TO BE RELEVANT

| Category* | Citation of document, with indication, where appropriate, of the relevant passages | Relevant to claim No. |
| --- | --- | --- |
| X | CN 104412425 A (KUREHA CORPORATION et al.) 11 March 2015 (2015-03-11) description, paragraphs 94-415 | 1-4, 9-13 |
| Y | CN 104412425 A (KUREHA CORPORATION et al.) 11 March 2015 (2015-03-11) description, paragraphs 94-415 | 3-8 |
| Y | CN 111384395 A (NINGDE AMPEREX TECHNOLOGY LTD.) 07 July 2020 (2020-07-07) description, paragraphs 32-81 | 3-8 |
| X | JP 2004296181 A (SANYO ELECTRIC CO., LTD.) 21 October 2004 (2004-10-21) description, paragraphs 4-35 | 1-4, 9-13 |
| Y | JP 2004296181 A (SANYO ELECTRIC CO., LTD.) 21 October 2004 (2004-10-21) description, paragraphs 4-35 | 3-8 |
| Y | CN 109659546 A (CHENGDU AIMINTE NEW ENERGY TECHNOLOGY CO., LTD.) 19 April 2019 (2019-04-19) description, paragraphs 3-10, 13 and 16-21 | 1-13 |
| Y | CN 111584831 A (JIANGXI GELINDE ENERGY CO., LTD.) 25 August 2020 (2020-08-25) description, paragraphs 5-14 | 1-13 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 May 2023** | **16 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/115926** |

### C. DOCUMENTS CONSIDERED TO BE RELEVANT

| Category* | Citation of document, with indication, where appropriate, of the relevant passages | Relevant to claim No. |
| --- | --- | --- |
| Y | KR 20170094540 A (SAMSUNG SDI CO., LTD.) 18 August 2017 (2017-08-18) description, paragraphs 8-57 | 1-13 |
| A | CN 114188533 A (EVE ENERGY CO., LTD.) 15 March 2022 (2022-03-15) entire document | 1-13 |

Form PCT/ISA/210 (second sheet) (July 2022)

**INTERNATIONAL SEARCH REPORT**
Information on patent family members

International application No.

**PCT/CN2022/115926**

| Patent document cited in search report | | | Publication date (day/month/year) | Patent family member(s) | | | Publication date (day/month/year) |
|---|---|---|---|---|---|---|---|
| CN | 104412425 | A | 11 March 2015 | JPWO | 2014038491 | A1 | 08 August 2016 |
| | | | | JP | 6345116 | B2 | 20 June 2018 |
| | | | | TW | 201419639 | A | 16 May 2014 |
| | | | | US | 2015188137 | A1 | 02 July 2015 |
| | | | | EP | 2894702 | A1 | 15 July 2015 |
| | | | | KR | 20150021045 | A | 27 February 2015 |
| | | | | KR | 101665843 | B1 | 12 October 2016 |
| | | | | WO | 2014038491 | A1 | 13 March 2014 |
| | | | | CN | 104412425 | B | 21 July 2017 |
| | | | | TW | I641178 | B | 11 November 2018 |
| CN | 111384395 | A | 07 July 2020 | WO | 2021184531 | A1 | 23 September 2021 |
| | | | | CN | 111384395 | B | 29 June 2021 |
| JP | 2004296181 | A | 21 October 2004 | JP | 4259900 | B2 | 30 April 2009 |
| CN | 109659546 | A | 19 April 2019 | CN | 109659546 | B | 23 November 2021 |
| CN | 111584831 | A | 25 August 2020 | CN | 111584831 | B | 28 October 2022 |
| KR | 20170094540 | A | 18 August 2017 | KR | 20150057731 | A | 28 May 2015 |
| | | | | US | 2015140435 | A1 | 21 May 2015 |
| CN | 114188533 | A | 15 March 2022 | | None | | |

Form PCT/ISA/210 (patent family annex) (July 2022)